# EUROPEAN PATENT APPLICATION

(11) **EP 1 387 266 A1**
(43) Date of publication of application: **04.02.2004**
(21) Application number: 03254611.1
(22) Date of filing: 24.07.2003
(51) Int. Cl.: G06F 9/45

(54) **Software pipelining for branching control flow**

(30) Priority: 30.07.2002 US 210016
(71) Applicant: Hewlett-Packard Company, Palo Alto, CA 94304 (US)
(72) Inventor: Johnson, Teresa L., Los Gatos CA 95033 (US); Hank, Richard E., San Jose CA 95136 (US)
(74) Representative: Powell, Stephen David

(57) **Abstract**

A software pipeline method commences pipeline operations [110], and if a flow control condition is valid, a branch operation is performed [120]. After pausing, the software pipeline method returns to the pipeline operations at the same point in the pipeline operations at which the pause initiated [130].

## Description

The present invention relates to memory devices and in particular to a system and method for software pipelining loops with multiple control flow paths. More particularly, the present invention relates to a magnetic storage device.

Electronic systems and circuits have made a significant contribution towards the advancement of modern society and are utilized in a number of applications to achieve advantageous results. Numerous electronic technologies such as digital computers, calculators, audio devices, video equipment, and telephone systems have facilitated increased productivity and reduced costs in analyzing and communicating data, ideas and trends in most areas of business, science, education and entertainment. Frequently, these activities involve information processing and demands forever greater performance and functionality gives rise to desires for faster processing capabilities.

Numerous electronic devices include processors that operate by executing programs comprising a series of instructions. These programs and their series of instructions are typically referred to as software. Software instructions include directions that guide processor device functions in the performance of useful tasks. For example, software code often includes "loops" in which a set of instructions are performed repetitiously for a predetermined number of iterations or until a particular condition exits. Loops typically provide a convenient and efficient software coding technique for executing multiple iterations of an algorithm.

The utility a processor device provides often depends upon the speed and efficiency at which instructions included in a software program are executed. Traditionally, tasks are performed in a serial manner in which one operation is performed and then the next operation is performed, one after another in a linear fashion. A purely sequential system typically requires a lot more time to complete a series of operations since one operation is not performed until the preceding operation is completed. Some traditional systems attempt to increase speed with software pipelining.

Software pipelining is a technique that often provides potential for significant performance increases, including saving time and facilitating maximized utilization of resources. Software pipelining typically involves "overlapping" of instruction processing in an attempt allow parallel processing of data in which instructions from one iteration are begun before the completion of instructions from a previous iteration. The operations of a single loop iteration are separated into *s* stages. After transformation, which may require the insertion of startup code to fill the pipeline for the first s-1 iterations and cleanup code to drain the pipeline for the last *s*-1 iterations, a single iteration of the transformed code will perform stage 1 from pre-transformation iteration *i*, stage 2 from pre-transformation iteration *i*-1, and so on. Such single iteration is known as the kernel of the transformed code. A particular known class of algorithms for achieving software pipelining is commonly referred to as "modulo scheduling", as described in James C. Dehnert and Ross A. Towle, "Compiling for the Cydra 5," in The Journal of Supercomputing, volume 7, (Kluwer Academic Publishers, Boston 1993). Modulo scheduling is also described in the following reference, B.R. Rau, "Iterative Modulo Scheduling," in The International journal of Parallel Processing, volume 24, no. 1 (February 1996). Modulo scheduling initiates loop iterations at a constant rate called the initiation interval (II).

While software pipelining has potential beneficial characteristics it is traditionally difficult to apply in some situations. For example loops containing branches that transfer the flow of control amongst different control flow paths or branches that transfer the flow of control out of the loop require transformation to make them amenable to software pipelining. There have been several attempts to software pipeline such loops using techniques such as hierarchical reduction described in M. S. Lam, " Software pipelining: An effective scheduling technique for VLIW machines" in Proceedings of the ACM SIGPLAN 1988 Conference on Programming Language Design and Implementation, pp. 318- 328, June 1988, if-conversion described in J. C. Dehnhert, P. Y. Hsu, and J. P. Bratt, " Overlapped loop support in the Cydra 5," in Proceedings of the Third International Conference on Architectural Support for Programming languages and Operating Systems, pp 26-38, April 1989, and enhanced modulo scheduling as described in N. J. Warter, G.E. Haab, K. Subramanian, and J. W. Bockhhaus, " Enhanced modulo scheduling for loops with conditional branches," in Proceedings of the 25^{th} Annual International Symposium on Microarchitecture, pp. 170-179, December 1992. However, these techniques often increase the resource requirements and the dependence height of the kernel which penalizes the heavily execution path through the loop since instructions from less frequently executed paths are included in the pipeline kernel and the length of the loop is increased. Another approach that converts loops containing multiple control flow paths into a loop with "early" exits often encounter difficulty addressing "early" exits and typically utilize tail duplication which increases code size as described in D. M. Lavery, " Modulo Scheduling for Control-Intensive General-Purpose Programs," PhD thesis, Department of Electrical and Computer Engineering, University of Illinois, Urbana, IL, May 1997.

The present invention is a system and method for software pipelining loops with multiple control flow paths. In one embodiment a software pipeline method commences pipeline operations. If a flow control condition is valid, a branch operation is performed. After pausing the software pipeline flow of control returns to the software pipeline operations at the same point in the pipeline operations at which the pause initiated. Loop operations in the main path (e.g., a frequent path) of the loop can be processed in accordance with a first schedule (e.g., a modulo schedule) and alternate path (e.g., an infrequent path) operations can be processed in accordance with a second schedule (e.g., a valid list schedule). The return to the main path (e.g., to the same cycle boundary as the branch operation) is performed in a manner that maintains appropriate sequential sequence within an iteration and parallel coherency of stage executions across multiple iterations of a loop. In one exemplary implementation, modulo scheduling the heavily executed path and branching out of the modulo schedule to less frequently executed paths prevents the heavily executed path from being penalized with additional instructions from the less frequently executed branch paths.

The accompanying drawings, which are incorporated in and form a part of this specification, illustrate embodiments of the invention and, together with the description, serve to explain the principles of the invention. The drawings referred to in this specification should be understood as not being drawn to scale except if specifically noted.
Figure 1 is a flow chart of a software pipelining method, one embodiment of the present invention.
Figure 2A is of a block diagram illustrating the control flow of exemplary conditional controls in a loop without the application of modulo scheduling.
Figure 2B illustrates achieving the control flow while using modulo scheduling techniques in accordance with one embodiment of the present invention.
Figure 3 is a block diagram showing the execution of multiple pipelined loop iteration operations.
Figure 4 shows a portion of a dependence graph modified in accordance with one embodiment of the present invention.
Figure 5 is a block diagram of computer system 500, one embodiment of a computer system on which the present invention may be implemented.
Figure 6 illustrates modulo scheduling of a loop containing multiple flows of control utilizes conditional branches and predicated instructions in accordance one embodiment of the present invention.

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it is understood the present invention may be practiced without these specific details. In other instances, some readily understood methods, procedures, components, and circuits have not been described in detail as not to unnecessarily obscure aspects of the current invention.

Some portions of the detailed descriptions that follow are presented in terms of procedures, logic blocks, processing, and other symbolic representations of operations on data bits within a computer memory. These descriptions and representations are the means generally used by those skilled in data processing arts to effectively convey the substance of their work to others skilled in the art. A procedure, logic block, process, etc., is here generally conceived to be a sequence of steps or instructions that guide operations of a system to a desired result. The steps include physical manipulations of physical quantities. Usually, though not necessarily, these quantities take the form of electrical, magnetic, optical, or quantum signals capable of being stored, transferred, combined, compared, and otherwise manipulated in a processing system. It has proven convenient at times, principally for reasons of common usage, to refer to these signals as bits, values, elements, symbols, characters, terms, numbers, or the like.

It should be borne in mind, however, that all of these and similar terms are associated with the appropriate physical quantities and are merely convenient labels applied to these quantities. Unless specifically stated otherwise as apparent from the following discussions, it is appreciated that throughout the present application, discussions utilizing terms such as "processing", "computing", "calculating" "determining", "displaying" or the like, refer to the action and processes of a computer system, or similar processing device (e.g., an electrical, optical, or quantum, computing device) , that manipulates and transforms data represented as physical (e.g., electronic) quantities. The terms refer to actions and processes of the processing devices that manipulate or transform physical quantities within a system's components (e.g., registers, memories, other such information storage, transmission or display devices, etc.) into other data similarly represented as physical quantities within the same or components.

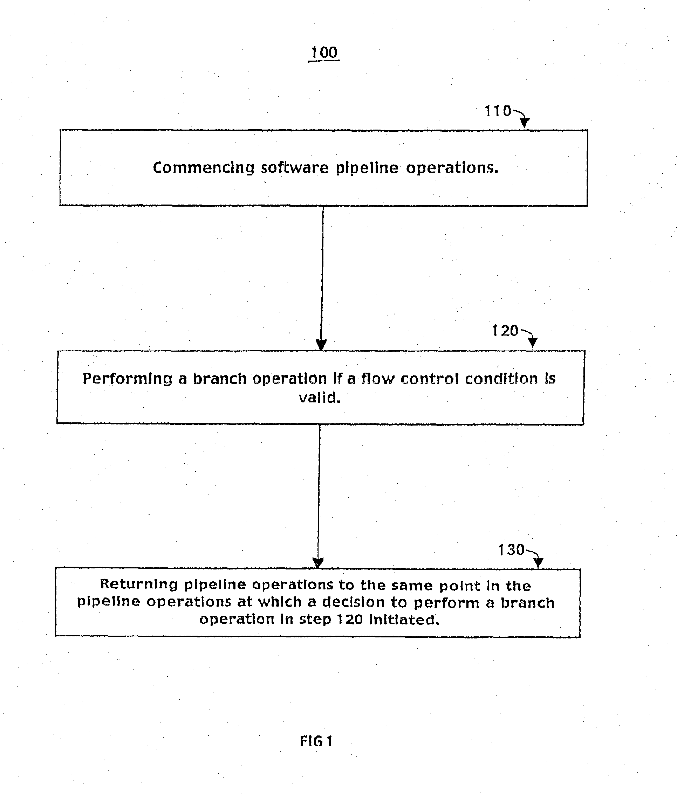

Figure 1 is a flow chart of software pipelining method 100, one embodiment of the present invention. Software pipelining method 100 facilitates efficient implementation of software instructions including handling loops with conditional control flow. The method allows instructions from different iterations to be processed in parallel, while maintaining a correct sequencing of control flow within an iteration, even in the presence of conditional branches within the loop.

In step 110, software pipeline operations commence. Software pipeline operations include executing loop iterations as part of a software pipeline sequence. For example, this may include testing a condition at some point during the loop iteration, wherein the loop operations are performed in accordance with a first schedule (e.g., a modulo schedule).

In step 120, a branch operation is performed if a flow control condition is valid. In one embodiment, the branching operation includes branching out of the pipeline at a cycle boundary (e.g., a point between two processor cycles) to perform a first instruction on an alternate path (e.g., an infrequent path of control flow in the loop) if the condition is true. Loop operations in the main path of the loop can be processed in accordance with a first schedule (e.g., a modulo schedule) and an alternate path (e.g., an infrequent path) operations can be processed in accordance with a second schedule (e.g., a valid list schedule) if a condition for the infrequent path control flow is true. The pipeline operations can be suspended (e.g., execution of the modulo schedule kernel is suspended) at a branch point of a loop iteration while waiting for information from the corresponding infrequent path operations.

At step 130 pipeline operations are returned to a point in the pipeline operations at which a decision to perform the branch operation in step 120 initiated. The return is performed in a manner that maintains appropriate sequential sequence within an iteration and parallel coherency of stage executions across multiple iterations of a loop. In one embodiment, a merge is made back to the same branch point (e.g., cycle boundary) at which the branch was made out of the pipeline. The loop operations at the conditional branch point are continued in accordance with a first schedule.

In one embodiment, predicated operations are included in the pipelined processing of loop iterations. The predicated operations are utilized to maintain proper sequencing in one implementation. For example, execution of a pipeline stage is handled based upon a predicate indication. A predicated operation in the pipeline is executed if the predicate value (e.g., a complement of the condition) is true. For example, an operation after the conditional branch point, which is on the main path of control flow but which should not be executed when the alternate path is taken from that branch point, is predicated upon the complement of said condition. In one embodiment, executing a predicated instruction process in the pipeline includes several operations. The validity of a predicate is checked. For example, the validity or truth of a value in a predicate register is analyzed. The remaining portion of the predicated pipeline operation is jumped over if the predicate is not valid. The remaining portion of the predicated pipelining operation is performed if the predicate value is valid.

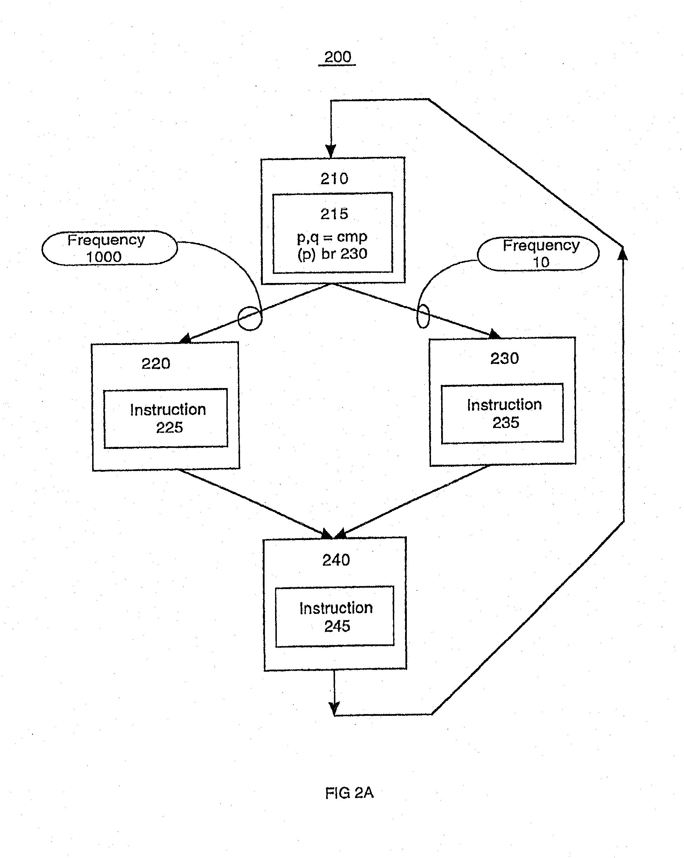

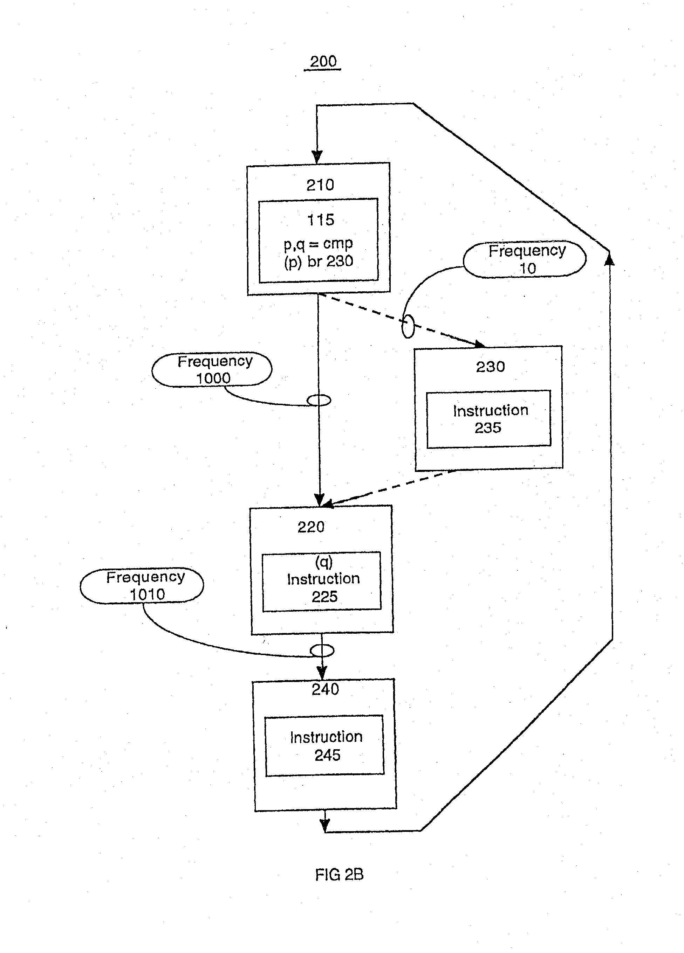

Figure 2A is a block diagram illustrating exemplary conditional controls on loop 200 without the application of modulo scheduling. Loop 200 includes blocks 210, 220, 230, and 240 which may include a variety of instructions or operations. Figure 2A indicates the basic intention to perform instruction 225 if condition q is true and instruction 235 if condition p is true, both of which are followed by instruction 245. In one exemplary implementation, 1000 iterations of loop 200 execute block 220 and 10 iterations of loop 200 execute block 230. Achieving appropriate control flows for loop 200 while preparing to perform modulo scheduling techniques in accordance with one embodiment of the present invention is illustrated in Figure 2B.

Figure 2B is a block diagram showing the control flow of loop 200 prepared for an exemplary implementation of software pipelining method 100. Loop 200 has a primary execution path of block 210, 220 and 240. Block 210 includes instruction 215 for testing a flow control condition. For example, a test may determine if predicate p or predicate q is true. In one exemplary implementation, predicates p and q are complimentary. If predicate q is true, the execution of loop 200 proceeds to block 220 and performs instruction 225 and then in block 240 instruction 245 is executed. If predicate p is true, the execution of loop 200 branches to block 230 in step 120 and performs instruction 225 and then returns to block 220 but skips over instruction 225 since predicate q is not true. Loop execution 200 performs block 240 (e.g., including instruction 245) and after executing instructions in block 240 returns to block 210.

The present invention allows programming loops including multiple flows of control to be modulo scheduled without relying on converting the loop into an increased length single basic block loop (e.g., via if-conversion). For example, in Figure 2B the blocks along the most heavily-executed path through the loop (e.g., the path through blocks 210, 220 and 240) are modulo scheduled but less-frequently-executed blocks (e.g., block 230) are not. Instructions from this heavily executed path from different iterations of the loop are pipelined. However, instructions from the less frequently executed blocks (e.g./ block 230) are not pipelined. Instead, in iterations when block 230 are executed (e.g., a flow control condition is true), the process branches out of the modulo scheduled kernel of the loop to block 230. The instructions in block 230 are executed and the process branches back into the modulo scheduled portion of the loop. The conditional branch to block 230 is pipelined along with the rest of the heavily-executed path.

In one embodiment of the present invention, instructions from one iteration of block 220 are pipelined with instructions from other iterations of the loop. The present invention ensures that proper sequential sequencing is maintained. For example, if a branch to block 230 is executed the instructions from block 220 for that iteration are not executed. Therefore, if instructions from block 220 are pipelined with instructions (e.g., 210, 240, etc.) from different iterations, then the instructions from other iterations are executed upon return to the pipeline from executing block 230 but the instructions in block 220 are not executed. In order to prevent execution of the instructions from block 220 in the same iteration, the block 220 instructions are guarded by a predicate that is the complement of the flow control condition under which a branch to block 220 is initiated. The software pipelining method 100 branches back into the modulo schedule at a point immediately after the branch to block 230. There are a variety of scheduling implementations that may occur depending upon the implementation.

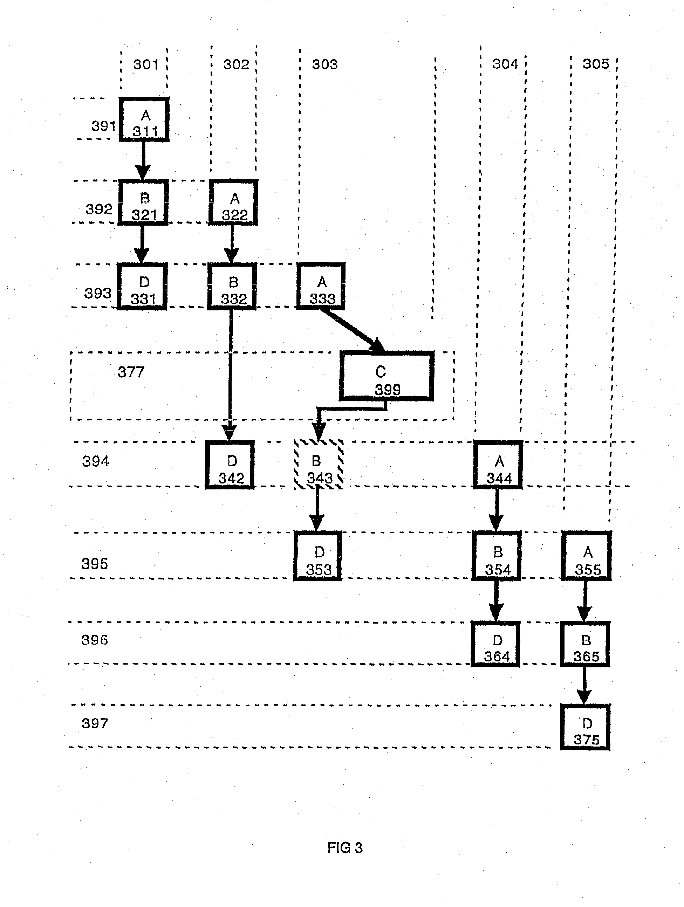

Figure 3 is a block diagram showing the execution of multiple pipelined loop iteration operations. In the present example, loop instructions A, B, C and D correspond to instructions 215, 225, 235, and 245 respectively of Figure 2B. Loop iterations 301 through 305 are executed during pipeline stages 391 through 397. For example, the software pipeline prologue includes stages 391 and 392, the software pipeline kernel includes stages 393 through 395, and the epilogue includes stages 396 through 397. Thus, the instruction execution instantiations 331, 332 and 333 for instructions D, B and A of iterations 301, 302, and 303 respectively are performed in accordance with a modulo schedule during the same pipeline stage 393.

The present exemplary implementation shows that a condition test performed in accordance with instruction A determines that a flow control condition is valid for iteration 303. There are a variety of scheduling implementations that may be utilized to maintain an appropriate sequential and parallel execution of loop instructions. In Figure 3 the modulo scheduling of the software pipelining operations is paused between stages 330 and 340 as a branch is made to execute instantiation 399 of instruction C for iteration 303. Thus, modulo scheduled software pipeline operations are suspended during cycles included in period 377.

Referring again to Figure 2, since modulo scheduling is not applied to the instructions in block 230, block 230 instructions are scheduled into a valid list schedule (straight-line code schedule) prior to modulo scheduling the loop. During scheduling, dependences between instructions are represented in a scheduling dependence graph. Each edge in the graph represents a dependence from the instruction at the source of the edge to the instruction at the destination of the edge. The edges are annotated with a dependence distance, which represents the number of cycles that elapse between the execution of the two instructions. In one exemplary implementation, the dependence graph includes the instructions within that loop when the loop is modulo scheduled.

In one embodiment, when modulo scheduling the heavily-executed path through a loop containing multiple control flows, the dependence graph does not contain the instructions in the loop iteration which will not be modulo scheduled (e.g., block 230 in the present example). In some implementations in which the code is modulo scheduled, instructions from infrequent path operations (e.g., block 230) have dependences with instructions on the heavily-executed path. For example, if instruction 245 from block 240 is dependent on instruction 235 in block 230, the compiler needs to know when instruction 245 is "ready" to be scheduled. In the present implementation, instruction 245 is ready at the point where the process branches back into the modulo schedule after executing block 230. Since the present invention branches back into the modulo schedule immediately after the branch out to block 235, as described earlier, instruction 245 is ready "immediately" after the branch to block 230 (e.g., once the predicate determination is made to skip instructions in block 220 for this iteration). Therefore, the dependence from instruction 235 to instruction 245 can be represented by an edge in the dependence graph from the conditional flow control operation in block 210 to instruction 245. In one embodiment, this new edge is annotated with a zero dependence distance, to optimize the scheduling of instructions along the heavily-executed path.

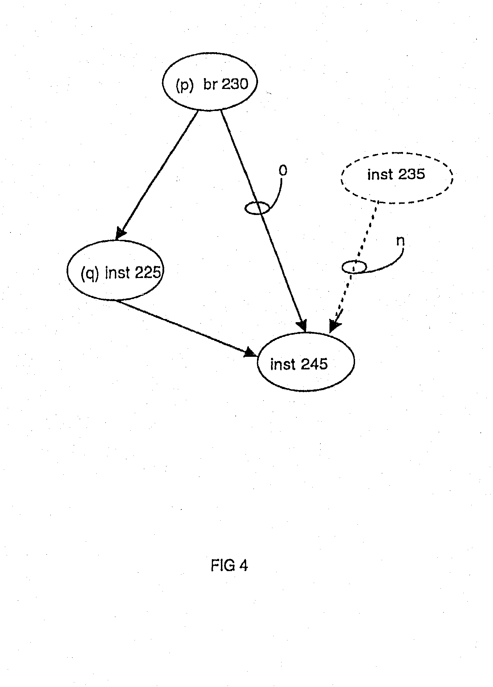

A portion of the modified dependence graph is shown in Figure 4. As a result, instruction 245 may be scheduled less than n cycles after instruction 235 in block 230, where n is the original dependence distance from instruction 230 to instruction 245. This may result in stalls in a scoreboarded machine (e.g., an Itanium) when executing instruction 245 in an iteration that includes a branch to block 230. Since block 230 is not heavily executed, this should be an infrequent occurrence. Thus, the loop operations are scheduled in accordance with a software pipeline scheduling dependence graph in which the operation cycles duration assigned to an edge between the conditional branch and a pipelined instruction is zero, wherein the pipelined instruction depends upon results of an infrequent path operation performed in accordance with a second schedule.

Similarly, an edge from an instruction in block 210 to an instruction in block 230 is represented by a new edge from the instruction in block 210 to the conditional branch to block 230. Again, this edge can have a 0 cycle dependence distance, in order to aggressively optimize the heavily-executed path. Once the dependence edges in the dependence graph to and from block 230 instructions have been represented by new edges to and from the branch to block 230, the instructions from block 230 are removed from the dependence graph, along with their associated edges.

In one embodiment of the present invention, rotating registers are used to support modulo scheduling. The rotating register assigned to the values used and defined by an instruction in the software pipeline depend upon the pipeline stage in which the instruction is scheduled. Although the instructions in block 230 are not modulo scheduled, the appropriate rotating registers are assigned to values consumed by instructions on the infrequently executed path that are produced by the software pipeline. Similarly, the appropriate rotating registers are assigned to values produced by instructions on the infrequently executed path that are consumed by instructions in the software pipeline. For example, the instructions on the alternate path (e.g., on the infrequently executed path are treated as belonging to the same stage as the corresponding branch from the main (e.g., heavily executed) pipelined path for the purposes of rotating register assignment.

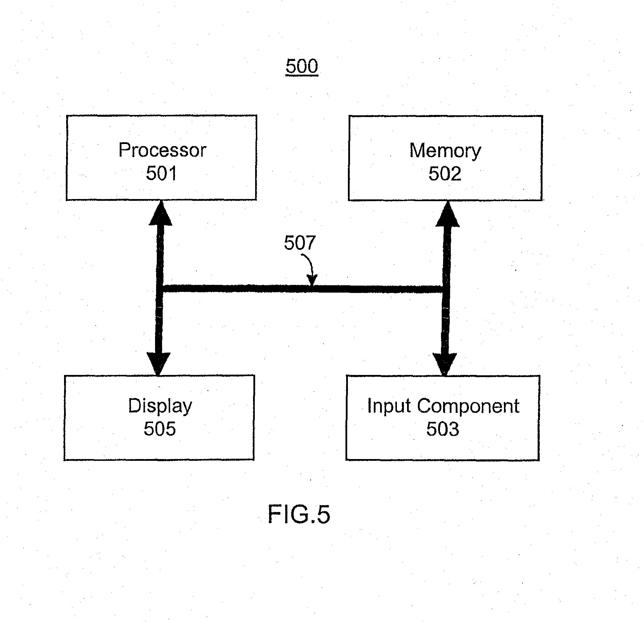

Software pipelining method 100 may be implemented on a computer system. Figure 5 is a block diagram of computer system 500, one embodiment of a computer system on which the present invention may be implemented. Computer system 500 includes communication bus 507, processor 501, memory 502, input component 503, and optional display module 505. Communication bus 507 is coupled to central processor 501, memory 502 input component 503, and optional display module 505. The components of computer system 500 cooperatively function to provide a variety of functions, including performing loop instructions in accordance with a present invention software pipelining method (e.g., software pipelining method 100). Communication bus 507 communicates information, processor 501 processes information and instructions, memory 502 stores information and instructions, input component 503 facilitates communication of information to computer system 500 and optional display module 505 displays information to the computer user.

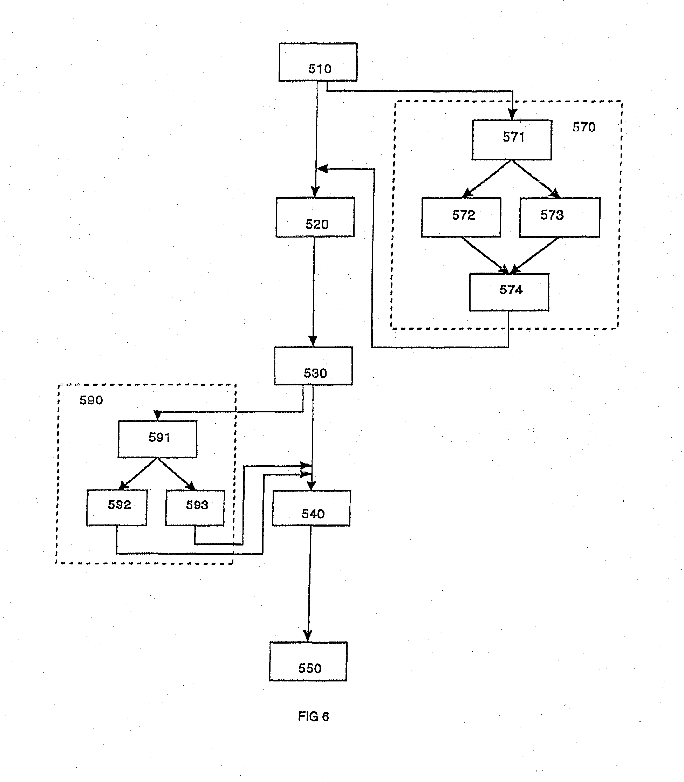

The present invention is readily adaptable to a variety of implementations. Figure 6 illustrates modulo scheduling of a loop containing multiple flows of control which utilizes conditional branches and predicated instructions in accordance with one embodiment of the present invention. In one embodiment, each less-frequently-executed path is entered from a single conditional branch on the heavily-executed path, and reentered at a single point on the heavily-executed path. For example, a heavily executed path includes blocks 510 through 550. A first branch includes blocks 571 through 574 and a second branch includes blocks 591 through 593. Blocks 520 and 530 include an operation predicated on the compliment of a conditional flow control value in block 510. Block 540 includes an operation predicated on the compliment of a conditional flow control value in block 530. A scheduling dependence graph is updated to correctly modulo schedule the heavily-executed path taking into account dependences from instructions on the multiple infrequent paths with appropriate rotating register allocation for a corresponding stage in the pipeline. Less-frequently-executed paths which themselves contain multiple flows of control are also processed. For example, the first branch 570 includes a conditional control flow in block 571 that directs the iteration path to either block 572 or block 574.

In one embodiment of the present invention, only the heavily-executed path is modulo scheduled. Branches are made out of and back into the modulo schedule to execute infrequent paths. By only modulo scheduling the heavily-executed path, and branching out of the modulo schedule to less frequently executed paths, the heavily executed path is not penalized with additional instructions from the less frequently executed branch paths. This reduces the schedule length of the modulo scheduled heavily executed path through the loop, thus decreasing the time it takes to execute the loop operations. Most iterations of the example do not branch out of the modulo scheduled portion of the loop onto the infrequent paths. For the relatively few times that iterations of the example do branch out of the modulo scheduled portion of the loop onto the infrequent paths, the additional time to perform the branches and the associated list schedules is less than the cumulative time for performing the infrequent path operations along with the more frequently executed path operations (e.g., as in an if- conversion).

Thus, the present invention facilitates fast pipeline processing of loops that include multiple control flow paths. The pipelining of a main frequently executed path with a branch out of the pipeline to infrequently executed path operations, and a subsequent return to the pipeline at the same point in the pipeline facilitates maintenance of sequential operations within an iteration and parallel operations across different iterations.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various modifications as are suited to the particular use contemplated. It is intended that the scope of the invention be defined by the Claims appended hereto and their equivalents.

## Claims

1. A software pipelining method comprising:
commencing pipeline operations [110];
performing a branch operation if a flow control condition is valid [120]; and
returning to said pipeline operations at a point in said pipeline operations at which a decision to perform said branch operation initiated [130].

2. A software pipelining method of Claim 1 wherein said pipeline operations perform loop instructions.

3. A software pipelining method of Claim 2 wherein said returning is performed in a manner that maintains a correct sequencing of control flow within an iteration [130].

4. A software pipelining method of Claim 1 further comprising performing a predicate instruction process [130].

5. A software pipelining method of Claim 4 wherein said predicate instruction process comprises:
checking the validity of a predicate [130];
jumping over the remaining portion of said predicate instruction process if said predicate is not valid [130]; and
executing the remaining portion of said predicate instruction process if said predicate is valid, including operations corresponding to a predicate instruction [130].

6. A software pipelining method of Claim 4 wherein said predicate [130] and said condition [110] are complimentary.

7. A software pipelining method of Claim 1 wherein said branch operation [120] is performed less frequently than said predicated operation.

8. A computer readable memory medium for storing instructions to direct processor operations comprising:
testing a flow control condition of a loop iteration during a software pipeline [110];
branching out of said software pipeline at a cycle boundary to perform processing of an instruction on an alternate path of said loop iteration if said loop flow control condition is true [120];
merging back to said cycle boundary to continue software pipeline operations [130]; and
handling processing of a predicated instruction of said loop iteration of said software pipeline based upon a predicate indication [130].

9. A memory medium of Claim 8 wherein said handling comprises:
examining the validity of said predicate indication;
jumping past instructions predicated on said predicate indication if said predicate value is not valid for said loop iteration; and
implementing said instructions predicated on said predicate indication if said predicate value is valid for said loop iteration.

10. A memory medium of Claim 8 wherein execution of a modulo schedule kernel is suspended at a branch point [110] of a loop iteration while waiting for information from corresponding infrequent path operations [120].
